# EUROPEAN PATENT APPLICATION

(11) **EP 1 748 180 A2**
(43) Date of publication of application: **31.01.2007**
(21) Application number: 06015087.7
(22) Date of filing: 19.07.2006
(51) Int. Cl.: F02N 15/02, G01M 15/04

(54) **An internal combustion engine and cold motoring testing method of the internal combustion engine**

(30) Priority: 29.07.2005 JP 2005220103
(71) Applicant: TOYOTA JIDOSHA KABUSHIKI KAISHA, Toyota-shi, Aichi-ken 471-8571 (JP)
(72) Inventor: Asada, Toshiaki Toyota Jidosha K.K., Aichi-ken, 471-8571 (JP); Ishikawa, Makoto Toyota Jidosha K.K., Aichi-ken, 471-8571 (JP); Suzuki, Tomoaki Toyota Jidosha K.K., Aichi-ken, 471-8571 (JP); Shiba, Toshimitsu Toyota Jidosha K.K., Aichi-ken, 471-8571 (JP); Sakai, Kazuhito Toyota Jidosha K.K., Aichi-ken, 471-8571 (JP)
(74) Representative: Kuhnen & Wacker

(57) **Abstract**

An internal combustion engine which includes a one-way clutch precisely controls the speed of the internal combustion engine according to rotation from an external source without greatly increasing costs. An engaging hole (8b) of a flywheel (8) and an engaging hole (12d) of a ring gear (12) are engaged with a bolt (32), which enables the ring gear (12) and an outer race support plate (10) to be fixed together via the flywheel (8). As a result, it is possible to prevent a difference from occurring between the rotational speed of the ring gear (12) and the rotational speed of the crankshaft (6) so the rotational speed of the crankshaft (6) can be precisely controlled by an external motor via a chuck (30) to a rotational state suitable for taking various measurements. The combination of the engaging hole (8b) of the flywheel (8) and the engaging hole (12d) of the ring gear (12) is an extremely simple structure so it can be realized without resulting in a large cost increase.

## Description

### BACKGROUND OF THE INVENTION

### 1. Field of the Invention

The invention relates to an internal combustion engine that transmits torque of a ring gear to a crankshaft via a one-way clutch, as well as a cold motoring testing method of the internal combustion engine.

### 2. Description of the Related Art

In an internal combustion engine, a ring gear for transmitting torque from a starter motor to a crankshaft is usually provided on the outer peripheral portion of a flywheel. If a torque converter is provided, the ring gear may be formed on an outer peripheral portion of a drive plate that is fixed to the cover of the torque converter and transmits the rotation of the crankshaft.

Japanese Patent Application Publication No. JP-A-2000-274337 (page 3, FIG 1), for example, discloses one such an internal combustion engine, in which a one-way clutch is interposed between a ring gear and a flywheel so that a pinion gear on the starter motor side is in constant mesh with the ring gear. Accordingly, the torque of the ring gear when the ring gear is rotated in one direction by the starter motor is transmitted to the crankshaft via the one-way clutch and the flywheel. When the output of the internal combustion engine rotates the crankshaft, the one-way clutch is released so that torque from the crankshaft is not transmitted to the ring gear side.

Even if the drive plate is used, it is still possible to connect the drive plate to the ring gear via the one-way clutch. In this case as well, constant mesh is possible just as it is when a flywheel is used.

However, the following problems arise when trying to measure the operation, oil leakage, noise and the like of various portions of the internal combustion engine, or when trying to measure data necessary for drive control of the internal combustion engine, for example, by forcibly rotating the internal combustion engine in a desired state.

That is, rotating the ring gear forces the crankshaft to rotate, so when taking measurements, the internal combustion engine is rotated by engaging the ring gear with a pinion gear that is driven by an external motor. In this case, when an attempt is made to rotate the internal combustion engine steadily at a predetermined speed, the cylinders of the internal combustion engine run through all of the strokes including the compression stroke and the expansion stroke, which produce torque fluctuation in the crankshaft. In particular, the rotation of the crankshaft accelerates from the compressed air in the cylinder during the expansion stroke. When the rotation of the crankshaft accelerates in this manner, the one-way clutch releases and the crankshaft rotates faster than the rotation according to the external motor. As a result, the speed of the internal combustion engine cannot be controlled through the external motor.

If the external motor is directly connected to the crankshaft, however, the internal combustion engine can be precisely controlled. In order to form such a connecting mechanism on the crankshaft, however, a special gear would need to be separately formed on the crankshaft. This would greatly increase the cost of the internal combustion engine for the sole purpose to taking measurements.

### SUMMARY OF THE INVENTION

The invention provides a an internal combustion engine and a cold motoring testing method of the internal combustion engine, in which the speed of the internal combustion engine can be precisely controlled according to the rotation of an external source, without leading to a large increase in cost.

The means and operational effects of the invention will hereinafter be described.

A first aspect of the invention relates to an internal combustion engine, which includes a ring gear, which transmits torque from a starter motor side to a crankshaft side via a one-way clutch and a crankshaft side member, which rotates in conjunction with the crankshaft. The one-way clutch transmits torque generated by the starter motor from the ring gear to the crankshaft in one direction and prevents the transmission of torque in the other direction. The internal combustion engine also includes an engaging state switching means for switching between a state that prohibits relative rotation in both directions between the ring gear and the crankshaft side member, by engaging the ring gear with the crankshaft side member, and a state that operates the one-way clutch without engaging the ring gear to the crankshaft side member. The internal combustion engine can be called as a startup torque transmitting mechanism of the internal combustion engine.

By providing the engaging state switching means in this way, relative motion in both directions between the ring gear and the crankshaft side member can be prohibited by the engagement of the ring gear and the crankshaft side member when taking various measurements by forcibly rotating the internal combustion engine. By controlling the ring gear to the necessary rotational state by an external motor or the like, it is also possible to precisely control the crankshaft of the internal combustion engine to a rotational state that corresponds to the rotation of the external motor or the like because the one-way clutch does not operate.

Once the various measurements have been taken, the external motor or the like is disconnected from the ring gear and the ring gear disengages from the crankshaft side member; thus, rendering the one-way clutch operational. As a result, engagement of the ring gear with the starter motor enables the internal combustion engine to be started and rotation of the ring gear can be stopped by operation of the one-way clutch after the internal combustion engine has started. Therefore, overspeeding of the starter motor can be prevented even if the ring gear is in constant mesh with the starter motor.

The engaging state switching means either prohibits the relative rotation or allows the one-way clutch to operate depending on whether the ring gear and the crankshaft side member are engaged together, and thus is an extremely simple structure. As a result, it can be realized without resulting in a large cost increase.

The engaging state switching means may include a first engaging hole formed in the crankshaft side member, a second engaging hole, which is formed in the same position in the radial direction as the first engaging hole in the ring gear, and an insertion member that is selectively inserted into both the first engaging hole and the second engaging hole, wherein the ring gear and the crankshaft side member engage when the insertion member is inserted through the first engaging hole and the second engaging hole, and the ring gear and the crankshaft side member are disengaged when the insertion member is not inserted through the first engaging hole and the second engaging hole.

Providing the engaging holes in both the crankshaft side member and the ring gear in this way enables the ring gear and the crankshaft side member to be engaged by inserting an insertion member through both of the holes. As a result, relative rotation in both directions between the ring gear and the crankshaft side memberis prevented.

Simply removing the insertion member so that it is not inserted through both of the engaging holes simultaneously, on the other hand, disengages the ring gear from the crankshaft side member, thus rendering the one-way clutch operational.

Accordingly, this kind of simple structure makes it possible to switch between a state that prohibits the relative rotation in both directions between the ring gear and the crankshaft side member and a state that renders the one-way clutch operational.

At least one of the first engaging hole and the second engaging hole may be a threaded hole and the insertion member may be a bolt.

Accordingly, the bolt can be fastened by the threaded hole so strong engagement of ring gear and the crankshaft side member can be achieved by a simple structure.

The first engaging hole provided in the crankshaft side member may also serve as a threaded hole used to attach a mechanism provided on the crankshaft side member.

Having the first engaging hole also serve as a threaded hole used to attach a mechanism, such as a clutch or converter, provided on the crankshaft side member in this way enables the first engaging hole to be formed simultaneously by machining a threaded hole that must be formed anyway. As a result, machining efficiency of the internal combustion engine can be increased

The crankshaft side member may include a race connecting-member that moves in conjunction with the crankshaft by being attached to the crankshaft side and that is connected to one race of the one-way clutch. The ring gear may be connected to the other race of the one-way clutch.

Further, the crankshaft side member may be formed of a combination of a flywheel to which a clutch mechanism is attached and the race connecting member arranged so as to contact one another.

This structure enables the internal combustion engine to be started by the starter motor if the ring gear and the crankshaft side member are not engaged by the engaging state switching means, and also makes it possible to prevent overspeeding of the starter motor after the internal combustion engine has started by operation of the one-way clutch, even if the starter motor side and the ring gear are in constant mesh.

In the foregoing structure as well, the engaging state switching means can be realized by a simple structure, as described above.

A second aspect of the invention relates to a cold motoring testing method of the internal combustion engine. This cold motoring testing method includes the steps of engaging the ring gear with the crankshaft side member so as to place the startup torque transmitting mechanism in a state that prohibits relative rotation in both directions between the ring gear and the crankshaft side member and then forcibly rotating the ring gear in order to measure a state of the internal combustion engine.

When taking various measurements by forcibly rotating the internal combustion engine in this way, the engaging state switching means is switched to a state prohibiting relative rotation between the ring gear and the crankshaft side member. Accordingly, rotation of the crankshaft that precisely corresponds to the rotation on the output side for measuring can be achieved even when the ring gear is forcibly rotated. As a result, the state of the internal combustion engine can be accurately measured.

The ring gear may be forcibly rotated by transmitting torque from an external power source to the ring gear.

Accordingly, if the external power source side is precisely controlled, the rotation of the crankshaft of the internal combustion engine can also be precisely controlled, thus enabling precise measurements of the internal combustion engine to be taken.

A third aspect of the invention relates to an internal combustion engine, which includes a ring gear that transmits torque from a starter motor side to a crankshaft side of via a one-way clutch, and a crankshaft side member that rotates in conjunction with a crankshaft, the one-way clutch transmitting torque generated by the starter motor from the ring gear to the crankshaft in one direction and preventing the transmission of torque in the other direction. The internal combustion engine includes a first hole formed in a side surface of the crankshaft side member and a second hole formed in the same position in the radial direction as the first hole in a side surface of the ring gear.

Providing holes (i.e., the first and second holes) in substantially the same positions in the radial direction in the side surfaces of the crankshaft side member and the ring gear in this manner makes it possible to easily prohibit relative rotation in both directions between the ring gear and the crankshaft side member by arranging a common member such as a bolt into the holes simultaneously. Thus, if the ring gear is precisely controlled to a required rotational state by using an external motor or the like while the engaging state switching means is in the state prohibiting relative rotation, the crankshaft of the internal combustion engine can also be precisely controlled to a rotational state corresponding to the rotation of the external motor or the like when taking various measurements by forcibly rotating the internal combustion engine.

Once the various measurements have been taken, the external motor or the like is disconnected from the ring gear and the common member that is arranged in both of the holes is removed, thus rendering the one-way clutch operational. As a result, engagement of the ring gear with the starter motor enables the internal combustion engine to be started and rotation of the ring gear can be stopped by operation of the one-way clutch after the internal combustion engine has started. Therefore, overspeeding of the starter motor can be prevented even if the ring gear is in constant mesh with the starter motor.

The engaging state switching means either prohibits relative rotation or allows the one-way clutch to operate depending on whether the common member is arranged in both of the holes of the ring gear and the crankshaft side member, and thus is an extremely simple structure. As a result, it can be realized without resulting in a large cost increase.

A fourth aspect of the invention relates to a cold motoring testing method of the internal combustion engine. This cold motoring testing method includes the steps of arranging a common member in the first hole and the second hole so as to place the internal combustion engine in a state that prohibits relative rotation in both directions between the crankshaft side member and the ring gear, and forcibly rotating the ring gear while the internal combustion engine is in the state that prohibits relative rotation in both directions between the crankshaft side member and the ring gear in order to measure a state of the internal combustion engine.

When taking various measurements by forcibly rotating the internal combustion engine in this way, rotation of the crankshaft that precisely corresponds to the rotation of the output side for measuring can be achieved even when the ring gear is forcibly rotated, by placing the internal combustion engine in a state that prohibits relative rotation, as described above, using the common member and both of the holes formed in the ring gear and the crankshaft side member. As a result, the state of the internal combustion engine can be accurately measured.

The ring gear may also be forcibly rotated by transmitting torque from an external power source to the ring gear.

Accordingly, if the external power source side is precisely controlled, the rotation of the crankshaft of the internal combustion engine can also be precisely controlled, which enables the state of the internal combustion engine to be accurately measured.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG 1 is a partially longitudinal sectional view of an internal combustion engine according to an embodiment of the invention; and
FIG. 2 is a partially longitudinal sectional view showing the state of an internal combustion engine during a cold motoring testing in an embodiment of the invention.

### DETAILED DESCRIPTION OF THE PREFERRED EMBODIMENTS

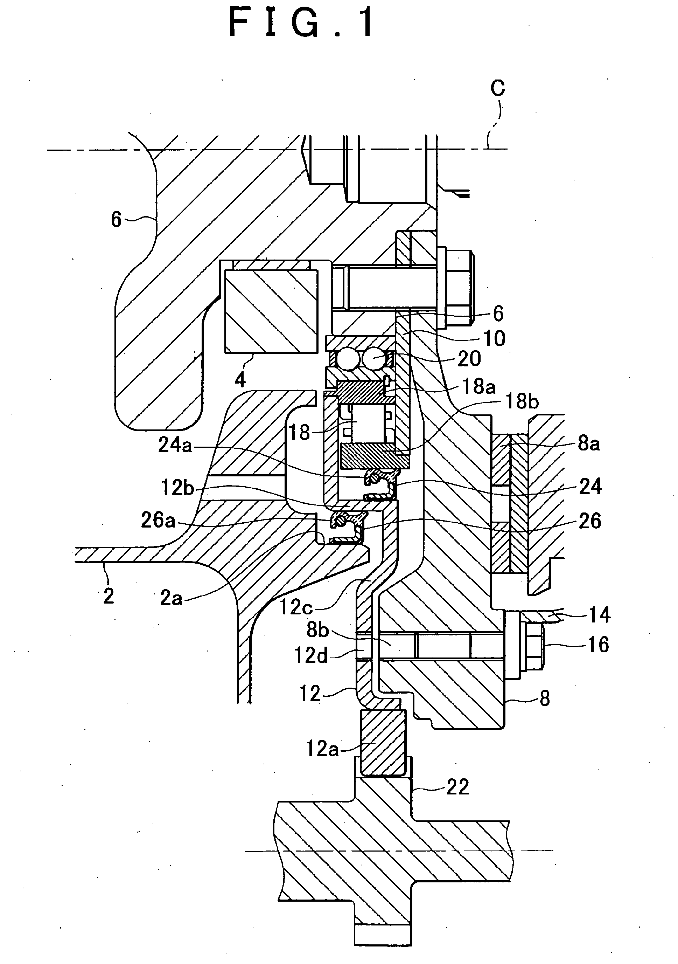

FIG. 1 is a partially longitudinal sectional view of an internal combustion engine for a vehicle, and shows the area on the rear of the internal combustion engine where power is output to the transmission.

A rear end portion of a crankshaft 6 that is rotatably supported on the cylinder block side by a ladder beam 4 is arranged above a rear end of an oil pan 2, which is in a lower portion of the internal combustion engine. A flywheel 8, an outer race support plate 10 (which can be regarded as a race connecting member), and a ring gear 12 are all mounted to the rear end portion of the crankshaft 6.

The flywheel 8, the lower half of which is shown in FIG. 1, is substantially disc-shaped, with the center portion being open in the shape of a circle. A ring-shaped clutch disc 8a, which serves as a portion of a clutch mechanism for transmitting torque to and from a transmission, is mounted to the side of the flywheel 8 that is opposite the side that contacts the outer race support plate 10. Also, a clutch housing 14 is attached to the flywheel 8 by bolts 16. A plurality of engaging holes 8b (which can be regarded as a first engaging hole and a first hole) into which the bolts 16 are threaded are formed around a rotational axis C. These engaging holes 8b extend, in the direction of the rotational axis C, through both the front and back surfaces of the flywheel 8. The bolts 16 for mounting the clutch housing 14 are sufficiently shorter than the engaging holes 8b so that they will not protrude from the front surface of the flywheel 8 toward the ring gear 12 side (i.e., the front side that corresponds to the left side in FIG.1).

The outer race support plate 10, the lower portion of which is shown in FIG 1, is formed in a flat circular shape with the center portion open. The outer race support plate 10 is fixed by a bolt both to the flywheel 8 and to a rear end surface 6a of the crankshaft 6 at the peripheral portion of the center opening. As a result, the outer race support plate 10 rotates in conjunction with both the flywheel 8 and the crankshaft 6. That is, in this embodiment, the combination of the flywheel 8 and the outer race support plate 10 can be regarded as a crankshaft side member.

The ring gear 12, the lower half of which is shown in FIG 1, is a circular disc in which the center portion is largely open and which has bent portions (a cylindrical stepped portion 12b and a curved portion 12c) in the radial direction. The ring gear 12 includes a flange-shaped inner race 18a of a one-way clutch 18 in the center open portion and a ring-shaped gear portion 12a on the outer peripheral portion. This ring gear 12 is mounted to the outer periphery of the crankshaft 6 via a bearing 20 (a roller bearing in this embodiment) on the center side, which is the side opposite the one-way clutch 18. Therefore, when the one-way clutch 18 is released, the ring gear 12 can rotate freely, independent of the rotation of the crankshaft 6.

The gear portion 12a of the ring gear 12 is in constant mesh with a pinion gear 22, which is rotated by a starter motor, so the ring gear 12 rotates when it receives torque from the starter motor via the pinion gear 22. A plurality of engaging holes 12d (which can be regarded as a second engaging hole and a second hole) are formed in the ring gear 12 in a region between the cylindrical stepped portion 12b and the gear portion 12a. These engaging holes 12d are formed as threaded engaging holes, which have the same shapes as the engaging holes 8b formed in the flywheel 8 described above. However, the lengths of the engaging holes 12d are different than the lengths of the engaging holes 8b. The engaging holes 12d of the ring gear 12 and the engaging holes 8b of the flywheel 8 are both the same distance away from the rotational axis C, i.e., they are in the same position in the radial direction. Therefore, if bolts with long shafts are used instead of the bolts 16, they can be threaded into both engaging holes 8b and 12d, thus integrating the flywheel 8 and the ring gear 12.

An outer race 18b is mounted to the outer peripheral portion of the outer race support plate 10 opposing the inner race 18a which is mounted in the center open portion of the ring gear 12 such that a one-way clutch 18 is formed between the ring gear 12 and the outer race support plate 10. Thus, the bearing 20 is arranged on the inner peripheral surface side of the inner race 18a and the one-way clutch 18 is formed on the outer peripheral side surface of the inner race 18a, which is on the opposite side of the inner race 18a from that inner peripheral surface.

The one-way clutch 18 engages the outer race support plate 10 with the ring gear 12 when the starter motor rotates the ring gear 12, via the pinion gear 22, during startup of the internal combustion engine, i.e., when the ring gear 12 is rotated in the direction that will enable torque to be transmitted to the outer race support plate 10. As a result, the starter motor can rotate the crankshaft 6 to start the internal combustion engine.

When the internal combustion engine starts to operate under its own power and the rotational speed of the outer race support plate 10, which rotates in conjunction with the crankshaft 6, exceeds the rotational speed of the ring gear 12 by the starter motor because of the output of the internal combustion engine, the ring gear 12 side effectively rotates in the opposite direction relative to the outer race support plate 10 so the one-way clutch 18 releases. Therefore, even if the pinion gear 22 and the ring gear 12 are in a state of constant mesh, overspeeding of the starter motor after startup of the internal combustion engine is avoided.

Furthermore, two ring-shaped oil seal members 24 and 26 are used to provide a seal against oil leaking between the ring gear 12 and the main body side of the internal combustion engine, which is the oil pan 2 and the cylinder block in this case, and to provide a seal against lubrication oil leaking from the bearing 20 and the one-way clutch 18. The first oil seal member 24 is arranged between the outer race 18b of the one-way clutch 18 and the cylindrical stepped portion 12b of the ring gear 12. This first oil seal member 24 is fixed to the ring gear 12 by being fitted to the inner peripheral surface of the cylindrical stepped portion 12b. Accordingly, a seal lip 24a formed on the inner peripheral side of the first oil seal member 24 slidably contacts the outer peripheral surface of the outer race 18b, thus forming an oil seal. The second oil seal member 26, which has a larger diameter than the first oil seal member 24, is arranged to the outside of the cylindrical stepped portion 12b. This second oil seal member 26 is fitted mainly in the inner peripheral surface 2a of the rear end of the oil pan 2 below the crankshaft 6 and mainly to an inner peripheral surface of the rear end of the cylinder block above the crankshaft 6 so as to be fixed in the position shown in the drawing. Accordingly, a seal lip 26a formed on the inner peripheral side of the second oil seal member 26 slidably contacts the outer peripheral surface of the cylindrical stepped portion 12b, thus forming an oil seal.

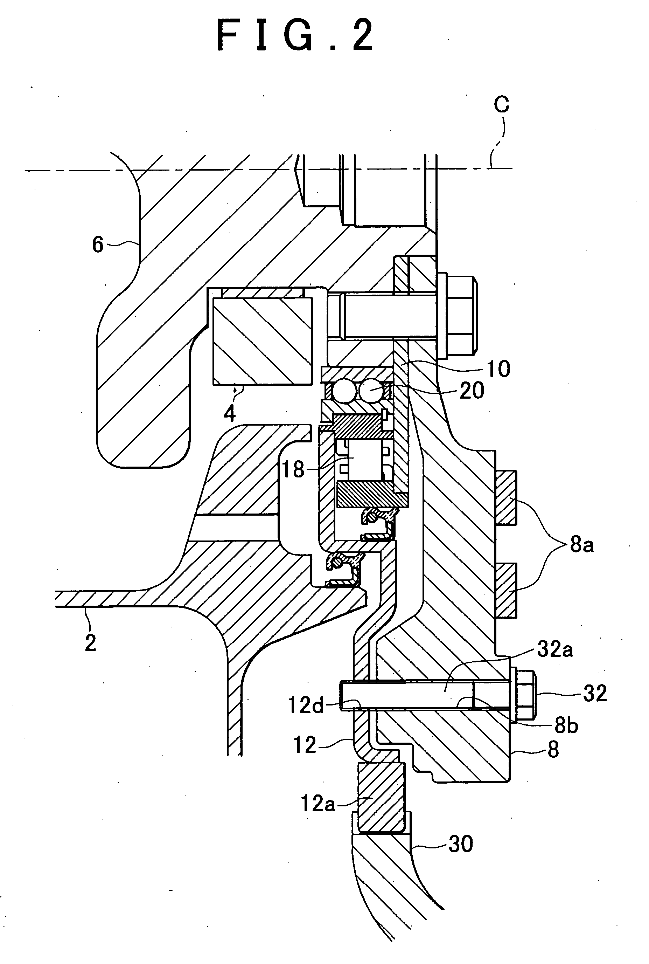

FIG 2 shows a partially longitudinal sectional view showing the state of the combustion engine during a cold motoring test as one method to forcibly rotating the internal combustion engine without firing. In this case, instead of the pinion gear 22, a chuck 30 for rotatably driving the ring gear 12 by an external motor serving as the external power source is in mesh with the gear portion 12a of the ring gear 12 because the pinion gear 22 shown in FIG 1 is not mounted to an internal combustion engine. In commercial tests, cold motoring tests are performed with the pinion gear 22 and the clutch housing 14, both shown in FIG 1, removed.

Moreover, before the cold motoring test, a bolt 32 (which can be regarded as an insertion member and a common member) with a long shaft 32a, as shown in FIG. 2, is threaded simultaneously into both the engaging hole 8b of the flywheel 8 and the engaging hole 12d of the ring gear 12 which has a rotational phase that matches the rotational phase of the engaging hole 8b of the flywheel 8. Accordingly, the ring gear 12 is integrated with the flywheel 8 and the outer race support plate 10 so the one-way clutch 18 is disengaged. In other words, the crankshaft 6 displays the same rotational behavior as the ring gear 12 regardless of the relative rotational direction in which torque is generated in the ring gear 12 with respect to the outer race support plate 10.

In this state, the rotation of the engaged ring gear 12 can be precisely controlled because the rotation of the chuck 30 is precisely controlled by the cold motoring test equipment. Therefore, the rotation of the crankshaft 6 that rotates in conjunction with the ring gear 12 via the outer race support plate 10 can also be precisely controlled by the cold motoring testing equipment.

The following effects can be obtained with the embodiment described above.
(I) Torque is transmitted from the ring gear 12 to the crankshaft 6 in only one direction because the ring gear 12 and the outer race support plate 10 are operatively linked via the one-way clutch 18. It is possible, however, to prohibit relative rotation between the ring gear 12 and the flywheel 8 during a cold motoring test by engaging the engaging hole 8b of the flywheel 8 with the engaging hole 12b of the ring gear 12 using the bolt 32, as shown in FIG 2. As a result, the ring gear 12 and the outer race support plate 10 can be integrated via the flywheel 8. Thus, it is possible to prevent a difference from occurring between the rotational speed of the ring gear 12 and the rotational speed of the crankshaft 6 even when the internal combustion engine shifts from a compression stroke to an expansion stroke. By enabling the rotational speed on the ring gear 12 side and the rotational speed on the crankshaft 6 side to completely match in this manner, it possible to precisely control the rotational state of the crankshaft 6 using an external motor provided in the cold motoring test equipment via the chuck 30, as shown in FIG 2. Thus it becomes possible to precisely control the rotational state of the internal combustion engine to a rotational state (such as constant rotational speed or constant torque) suitable for taking the various measurements by the cold motoring test equipment.

Once the various measurements have been taken, the chuck 30 is disengaged from the ring gear 12 and the long bolt 32 is removed from the two engaging holes 12d and 8b. Then, as shown in FIG. 1, the clutch housing 14 is fitted in place by threading the bolt 16 of normal length into the engaging hole 8b in the flywheel 8.

As a result, the one-way clutch 18 can be rendered operational again so the internal combustion engine can be started up with the pinion gear 22 for the starter motor and the ring gear 12 in constant mesh. In addition, the rotation of the ring gear 12 can be stopped after the internal combustion engine starts up so the starter motor will not overspeed.

The combination of the engaging hole 8b of the flywheel 8 and the engaging hole 12d of the ring gear 12, which can be regarded as engaging state switching means, is an extremely simple structure so it can be realized without resulting in a large cost increase.

(II) The engaging hole 8b of the flywheel 8 is a threaded hole that is used not only for fixing the flywheel 8 and the ring gear 12 together with the long screw 32, which serves as the insertion member, but also for fixing the clutch housing 14 to the flywheel 8, as shown in FIG 1, when the vehicle is assembled.

Thus, basically, machining of the bolt threaded hole formed for assembling the clutch is at the same time machining of the first engaging hole for fixing the flywheel 8 and the ring gear 12 together, so machining efficiency of the internal combustion engine can be increased.

(a) In the foregoing embodiment, the ring gear 12 and the crankshaft 6 are rotated as a single unit by threading the long bolt 32 into both the flywheel 8 and the ring gear 12, as shown in FIG 2. When a drive plate is used, such as in the case of a torque converter, instead of the flywheel 8, however, the ring gear 12 and the crankshaft 6 may be rotated as a single unit by threading the long bolt 32 into both the drive plate and the ring gear 12.

The effects of the foregoing embodiment are also obtained with this kind of structure.
(b) In the foregoing embodiment, both the engaging hole 8b of the flywheel 8 and the engaging hole 12d of the ring gear 12 are threaded holes. However, as long as the engaging hole 8b of the flywheel 8, into which the bolt 16 for attaching the clutch housing 14 is threaded, is a threaded hole, the engaging hole 12d of the ring gear 12 does not have to be a threaded hole.

Also, instead of using the the engaging hole 8b of the flywheel 8 to attach the clutch housing 14, the engaging hole 8b may be formed independently. In this case, as long as one of the engaging holes, either the engaging hole 8b of the flywheel 8 or the engaging hole 12d of the ring gear 12, is a threaded hole, the other of the engaging hole 8b or 12d does not have to be a threaded hole, i.e., in this case, it is not necessary that both of the engaging holes 8b and 12d be threaded holes.

(c) In the foregoing embodiment, the flywheel 8 and the outer race support plate 10 are formed separately, as shown in FIGS. 1 and 2. Alternatively, however, the flywheel 8 may also serve as the outer race support plate 10. That is, the outer race 18b may be provided on the flywheel 8 such that the one-way clutch 18 is formed directly on the flywheel 8. Accordingly in this case, the one-way clutch 18 may be regarded as a crankshaft side member.

## Claims

1. An internal combustion engine that includes a ring gear (12), which transmits torque from a starter motor side to a crankshaft (6) side via a one-way clutch (18), and a crankshaft side member (8, 10), which rotates in conjunction with the crankshaft (6), the one-way clutch (18) transmits torque generated by the starter motor from the ring gear (12) to the crankshaft (6) in one direction and prevents the transmission of torque in the other direction,
**characterised by** comprising:
engaging state switching means that switches between a state that prohibits relative rotation in both directions between the ring gear (12) and the crankshaft side member (8) by engaging the ring gear (12) with the crankshaft side member (8), and a state that operates the one-way clutch (18) without engaging the ring gear (12) and the crankshaft side member (8).

2. The internal combustion engine according to claim 1, **characterised in that** the engaging state switching means includes a first engaging hole (8b), formed in the crankshaft side member (8), a second engaging hole (12d), which is formed in the same position in the radial direction as the first engaging hole (8b) in the ring gear (12), and an insertion member (16, 32) that is selectively inserted into the first engaging hole (8b) and the second engaging hole (12d), wherein the ring gear (12) and the crankshaft side member (8) engage when the insertion member (32) is inserted through the first engaging hole (8b) and the second engaging hole (12d), and the ring gear (12) and the crankshaft side member (8) do not engage when the insertion member (16, 32) is not inserted through the first engaging hole (8b) and the second engaging hole (12d).

3. The internal combustion engine according to claim 2, **characterised in that** at least one of the first engaging hole (8b) and the second engaging hole (12d) is a threaded hole and the insertion member (16, 32) is a bolt.

4. The internal combustion engine according to claim 3, **characterised in that** the first engaging hole (8b) also serves as a threaded hole used to attach a mechanism (14) provided on the crankshaft side member (8).

5. The internal combustion engine according to any one of claims 1 to 4,
**characterised in that** the crankshaft side member (8, 10) includes a race connecting member (10), that is attached to the crankshaft (6) side and is connected to one race (18b) of the one-way clutch (18); and the ring gear (12) is connected to the other race (18a) of the one-way clutch (18).

6. The internal combustion engine according to claim 5, **characterised in that** the crankshaft side member (8, 10) is formed of a combination of a flywheel (8) to which a clutch mechanism is attached and the race connecting member (10) arranged so as to contact one another.

7. A cold motoring testing method of the internal combustion engine according to any one of claims 1 to 6, **characterised by** comprising the steps of:
engaging the ring gear (12) with the crankshaft side member (8) to place the engaging state switching means in a state that prohibits relative rotation in both directions between the ring gear (12) and the crankshaft side member (8); and
forcibly rotating the ring gear (12) when the engaging state switching means is in the state that prohibits relative rotation in both directions between the ring gear (12) and the crankshaft side member (8) in order to measure a state of the internal combustion engine.

8. The cold motoring testing method of an internal combustion engine according to claim 7, **characterised in that** the ring gear (12) is forcibly rotated by transmitting torque from an external power source to the ring gear (12).

9. An internal combustion engine, which includes a ring gear (12) that transmits torque from a starter motor side to a crankshaft (6) side via a one-way clutch (18), and a crankshaft side member (8, 10) that rotates in conjunction with a crankshaft (6), the one-way clutch (18) transmitting torque generated by the starter motor from the ring gear (12) to the crankshaft (6) in one direction and preventing the transmission of torque in the other direction,
**characterised by** comprising:
a first hole (8b) formed in a side surface of the crankshaft side member (8) and a second hole (12d) formed in the same position in the radial direction as the first hole (8b) in a side surface of the ring gear (12).

10. A cold motoring testing method of the internal combustion engine according to claim 9, **characterised by** further comprising:
arranging a common member in the first hole (8b) and the second hole (12d) to prohibit relative rotation in both directions between the crankshaft side member (8) and the ring gear (12); and
forcibly rotating the ring gear (12) to measure a state of the internal combustion engine.

11. The cold motoring testing method according to claim 10, **characterised in that** the ring gear (12) is forcibly rotated by transmitting torque from an external power source to the ring gear (12).
